(19) Europäisches Patentamt
European Patent Office
Office européen des brevets

(11) Publication number: 0 264 143 B1

# (12) EUROPEAN PATENT SPECIFICATION

(45) Date of publication of the patent specification: 10.10.90

(51) Int. Cl.[5]: C08K 3/32, C08L 67/00, C08L 69/00

(21) Application number: 87201541.7

(22) Date of filing: 13.08.87

## (54) Polymer mixture having at least two aromatic polyesters and a phosphate stabiliser.

(30) Priority: 30.09.86 NL 8602460

(43) Date of publication of application: 20.04.88 Bulletin 88/16

(45) Publication of the grant of the patent: 10.10.90 Bulletin 90/41

(84) Designated Contracting States: DE FR GB IT NL

(56) References cited:
WO-A-85/05114
GB-A- 1 466 154

(73) Proprietor: GENERAL ELECTRIC COMPANY, 1 River Road, Schenectady, N.Y. 12151(US)

(72) Inventor: Verhoeven, Jeroen Johannes, General Electric Plastics B.V. P.O. Box 117, NL-4600 AC Bergen op Zoom(NL)

(74) Representative: Schüler, Horst, Dr. et al, Kaiserstrasse 69, D-6000 Frankfurt/Main 1(DE)

EP 0 264 143 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a polymer mixture comprising at least two aromatic polyesters and comprising a phosphate as a stabiliser, and to articles formed from said polymer mixture.

Polymer mixtures which comprise a mixture of an aromatic polyester, a polycarbonate and a phosphorus compound are known from United States Patent Specification 3,953,539. The known polymer mixtures comprise a phosphorus compound to prevent discoloring of the polymer mixture. As phosphorus compounds are mentioned phosphates, for example, monosodium phosphate, disodium phosphate and trisodium phosphate.

It has been found experimentally that the above-mentioned phosphates are active to stabilise polymer mixtures which comprise two or more aromatic polyesters. In practice, however, a drawback occurs when the above-mentioned phosphates are used: in melting processes, injection moulding, extrusion and the like of the polymer mixtures which comprise such a phosphate, the phosphate can easily condense to form agglomerates. Once this happens, said agglomerates show the tendency of forming a deposit in undesired places in the extrusion machine or injection moulding machine.

British Patent Specification l,060,40l describes polymer mixtures which comprise at least two polyesters. These known polymer mixtures are stabilised with a compound comprising an organic or inorganic phosphorus. As examples are mentioned organic phosphates, for example, ammonium phosphate. The possibility is also mentioned to use organic phosphates, for example, tetrabutyl pyrophosphate. As is known, pyrophosphates are sometimes termed diphosphates.

It has been found, however, that diphosphates which comprise no OH-groups, for example, tetrabutyl pyrophosphate, do not have any stabilising effect for polymer mixtures.

The polymer mixtures according to the invention are characterised in that the polymer mixture comprises as a stabiliser a diphosphate of the formula

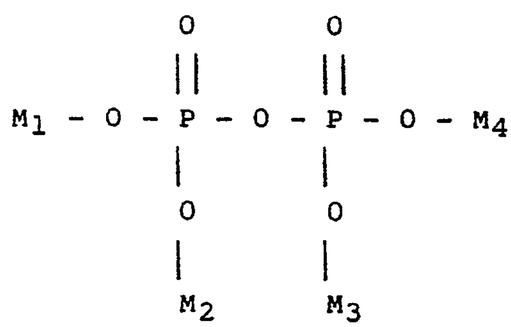

wherein $M_1$, $M_2$, $M_3$ and $M_4$, each independently of each other, represent a hydrogen, an alkali metal, an ammonium group or - with a corresponding adaptation of the formula - an alkaline earth metal, with the proviso that at least one group selected from $M_1$, $M_2$, $M_3$ and $M_4$ represents a hydrogen atom. Preferably, at least two groups selected from $M_1$, $M_2$, $M_3$ and $M_4$ are a hydrogen atom.

The diphosphate stabiliser in the polymer mixtures according to the invention is preferably used in a quantity from 0.05-5% by weight calculated with respect to the sum of the quantities by weight of aromatic polyesters.

A suitable diphosphate for the polymer mixtures according to the invention is disodium diphosphate.

The polymer mixtures according to the invention may comprise in particular a mixture of 5-95% by weight of a polyalkylene terephthalate, for example, polybutylene terephthalate, and 95-5% by weight of an aromatic polycarbonate. The weight percentages are calculated with respect to the sum of the quantities by weight of the polyesters.

In addition to the constituents mentioned hereinbefore, the polymer mixtures according to the invention may comprise agents to improve the impact strength. Moreover they may comprise fillers, reinforcing fibres, plasticisers, dyes, pigments, further stabilisers, mould-release agents, flame-retarding agents and further conventional additives.

The polymer mixtures according to the invention comprise two or more aromatic polyesters.

The polymer mixtures according to the invention comprise at least two different aromatic polyesters. Examples of suitable aromatic polyesters are the aromatic polyesters selected from the following groups of compounds:

A. polyalkylene terephthalate, for example polybutylene terephthalate and polyethylene terephthalate;

B. aromatic polycarbonates, homopolymers or copolymers, for example, polycarbonates derived from bisphenol-A and phosgene;

C. polyesters derived from one or more aromatic dicarboxylic acids, optionally mixed with a small quantity of aliphatic dicarboxylic acids on the one hand and one or more diols, for example, a mixture of ethylene glycol and dimethanol cyclohexane; on the other hand;

D. aromatic polyester carbonates;
E. polyetherester block copolymers derived from a polyether and the conventional components for an aromatic polyester;
F. aromatic polythio esters;
G. polythiocarbonates, for example, derived from bisphenol-A and $CSC\ell_2$;
H. completely aromatic polyesters, for example, polyesters derived from aromatic diol compounds and aromatic carboxylic acids.

As agents to improve the impact strength are to be considered all agents known perse for polyesters, in particular also the so-called core-shell copolymers. These are copolymers built up from a rubber-like core on which one or more thermoplastic shells have been provided. The rubber-like core in its turn may be built up from one or more different monomers, for example, acrylates, polydienes and vinylaromatic compounds. The core may be cross-linked. The shell or the shells is or are generally built up from monomers which lead to a rigid monomer, for example, methyl methacrylate, vinylaromatic compounds and acrylonitrile. When using more than one shell it is possible to use one rubber-like shell.

As agents to improve the impact strength are furthermore suitable, for example, ABS, ASA and MBS copolymers. These copolymers may have various morphologies, for example, a core-shell structure or a random graft copolymer.

The invention will be described with reference to the ensuing specific examples.

Example I, comparative examples A and B

In all three examples a polybutylene terephthalate (intrinsic viscosity I.23 parts/g at 25° C in phenol/tetrachloroethane 60/40) was used as the first polyester and an aromatic polycarbonate (derived from bisphenol A, having an intrinsic viscosity of 5.3 parts/g at 25° C in methylene chloride) was used as the second polyester. The polyester, the polycarbonate and the phosphate were mixed in a weight ratio of 45 : 54.7 : 0.3. The formed PC/PBT/sodium phosphate mixture was extruded in a film extruder at 255° C. Approximately I5 milligrammes of the extruded film were investigated by means of differential scanning calorimetry.

The Tg value for the PC in the mixture and the melting-point (Tm) of the PBT were measured as a function of the time, the sample being kept at 260° C. The longer the Tg value of the PC remains constant (at approximately I50° C), the stabler is the mixture. The same applies to the Tm value for the PBT (approximately 225° C).

The nature of the phosphate used and the results obtained are recorded in table A hereinafter.

Table A

| Example | A | B | C |
|---|---|---|---|
| Nature of the phosphate | Trisodium monophosphate | Tetrasodium diphosphate | Disodium diphosphate |
| Tg (°C) of the PC after x minutes at 260° c | | | |
| 0 | 88.5 | 147.8 | 149.4 |
| 10 | 88.6 | - | - |
| 20 | - | 86.7 | 128.1 |
| 30 | - | - | 121.1 |
| Tm (°C) of the PBT after x minutes at 260° c | | | |
| 0 | 224 | 224 | 225 |
| 10 | 221 | - | - |
| 20 | - | 207 | 225 |
| 30 | - | - | 223 |

It appears from the results recorded in the above table that a polymer mixture according to the invention with disodium diphosphate (example I) has a better stability than the polyester mixtures according to the comparative examples.

Examples II and III, comparative examples C to F inclusive.

Various polyester mixtures were prepared using different polyesters and different phosphates. The following compounds were used:

PC = aromatic polycarbonate, derived from bisphenol-A and phosgene, having an intrinsic viscosity of 5.3 parts/g at 25° C in methylene chloride.
PBT = polybutylene terephthalate having an intrinsic viscosity of I.23 parts/g at 25° C in a 60/40 mixture of phenol/tetrachloroethane.
DSDP = disodium diphosphate, stabiliser according to the invention.
DBDP = dibutyl diphosphate, stabiliser for comparative experiments.
MSP = monosodium phosphate, stabiliser for comparative experiments.
TSDP = tetrasodium diphosphate, stabiliser for comparative experiments.

The above-mentioned constituents were mixed in an extruder (300° C) in the quantities as indicated hereinafter in Table B. The extrudate was chopped up to pellets. Standardised plates for measuring the Vicat B value were manufactured from the pellets by injection moulding. For each polymer, injection moulding was always carried out under two different conditions: a) under normal conditions (for PC-PBT mixtures at 260° C, with a residence time in the injection moulding machine of 2 minutes), and b) under heavier conditions (for PC-PBT mixtures at 285° C, residence time 6 minutes).

The Vicat B values after injection moulding under heavier conditions are recorded in Table B. A higher Vicat value in this case indicates a stabler mixture.

It may be seen from Table B that the disodium diphosphate as used in examples II and III stabilises approximately equally well as the monosodium phosphate frequently used in practice (comparative example C). The disodium diphosphate stabilises much better than the dibutyl diphosphate (comparative examples E and F) according to GB-A-l,060,40l or the tetrasodium diphosphate (comparative example D).

Table B

| Example | II | III | C | D | E | F |
|---|---|---|---|---|---|---|
| Composition (wt.%) | | | | | | |
| PC | 54.7 | 54.7 | 54.7 | 54.7 | 54.7 | 54.7 |
| PBT | 45 | 45 | 45 | 45 | 45 | 45 |
| PET | - | - | - | - | - | - |
| DSDP | 0.3 | 0.6 | - | - | - | - |
| DBDP | - | - | - | - | 0.3 | 0.6 |
| MSP | - | - | 0.3 | - | - | - |
| TSDP | - | - | - | 0.3 | - | - |
| Vicat B value (°C) after injection moulding under heavier conditions | 121 | 126 | 127 | 101 | 108 | 99 |

## Claims

l. A polymer mixture comprising at least two aromatic polyesters and comprising a phosphate as a stabiliser, characterised in that the polymer mixture comprises as a stabiliser a diphosphate of the formula

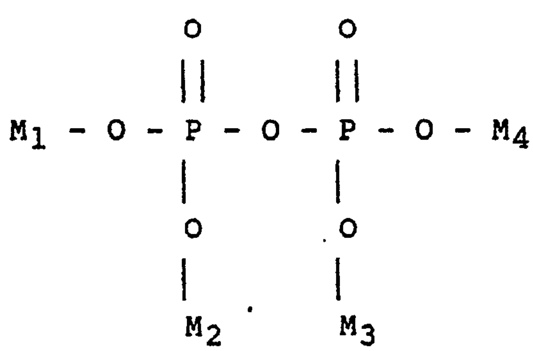

wherein $M_1$, $M_2$, $M_3$ and $M_4$, each independently of each other, represent a hydrogen, an alkali metal, an ammonium group or - with corresponding adaption of the formula - an alkaline earth metal, in which, however, at least one group selected from $M_1$, $M_2$, $M_3$ and $M_4$ represents a hydrogen atom.

2. A polymer mixture as claimed in Claim I, characterised in that the polymer mixture comprises as a stabiliser 0.05-5% by weight of the diphosphate stabiliser, calculated with respect to the sum of the quantities by weight of aromatic polyesters.

3. A polymer mixture as claimed in Claims I-2, characterised in that the polymer mixture comprises disodium diphosphate as a stabiliser.

4. A polymer mixture as claimed in Claims I-3, characterised in that the polymer mixture comprises 5-95% by weight of a polybutylene terephthalate polyester and 95%-5% by weight of an aromatic polycarbonate, calculated with respect to the sum of the quantites by weight of aromatic polyesters.

5. A polymer mixture as claimed in Claims I-4, characterised in that the polymer mixture comprises an agent to improve the impact strength.

6. A polymer mixture as claimed in Claims I-5, characterised in that the polymer mixture comprises one or more of the following constituents: fillers, reinforcing fibres, plasticisers, dyes, pigments, further stabilisers, mould-release agents, flame-retarding agents.

7. Articles formed from the polymer mixture as claimed in one or more of the preceding Claims.

**Patentansprüche**

1. Polymermischung enthaltend wenigstens zwei aromatische Polyester und enthaltend ein Phosphat als Stabilisator, dadurch gekennzeichnet, daß die Polymermischung als Stabilisator ein Diphosphat der Formel

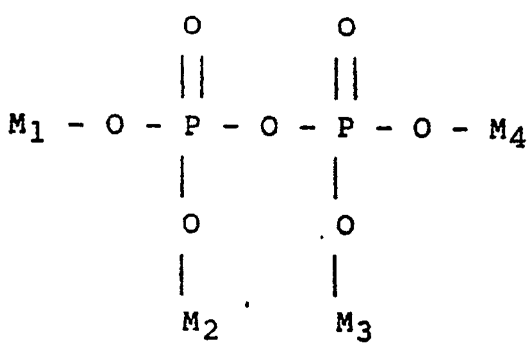

enthält, worin $M_1$, $M_2$, $M_3$ und $M_4$ jeweils unabhängig voneinander ein Wasserstoff, ein Alkalimetall, eine Amoniumgruppe oder, mit entsprechender Anpassung der Formel, ein Erdalkalimetall darstellen, worin jedoch wenigstens eine Gruppe ausgewählt aus $M_1$, $M_2$, $M_3$ und $M_4$ ein Wasserstoffatom darstellt.

2. Polymermischung nach Anspruch 1, dadurch gekennzeichnet, daß die Polymermischung als Stabilisator 0,05 bis 5 Gew.-% des Diphosphatstabilisators enthält, berechnet unter Bezugnahme auf die Summe der Gewichtsmengen der aromatischen Polyester.

3. Polymermischung nach den Ansprüchen 1 bis 2, gekennzeichnet dadurch, daß die Polymermischung Dinatriumdiphosphat als einen Stabilisator enthält.

4. Polymermischung nach den Ansprüchen 1 bis 3, dadurch gekennzeichnet, daß die Polymermischung 5 bis 95 Gew.-% eines Polybutylenterephthalatpolyesters und 95 bis 5 Gew.-% eines aromatischen Polycarbonats, berechnet unter Bezugnahme auf die Summe der Gewichtsmengen der aromatischen Polyester, enthält.

5. Polymermischung nach den Ansprüchen 1 bis 4, dadurch gekennzeichnet, daß die Polymermischung ein Mittel zur Verbesserung der Schlagfestigkeit enthält.

6. Polymermischung nach den Ansprüchen 1 bis 5, dadurch gekennzeichnet, daß die Polymermischung einen oder mehrere der folgenden Bestandteile enthält: Füllstoffe, verstärkende Fasern, Weichmacher, Farbstoffe, Pigmente, weitere Stabilisatoren, Formentrennmittel, flammhemmende Mittel.

7. Gegenstände, die aus der Polymermischung nach einem oder mehreren der vorstehenden Ansprüche ausgeformt sind.

## Revendications

1. Mélange de polymères comprenant au moins deux polyesters aromatiques et comprenant un phosphate comme stabilisant, ce mélange de polymères étant caractérisé en ce qu'il comprend comme stabilisant un diphosphate de formule

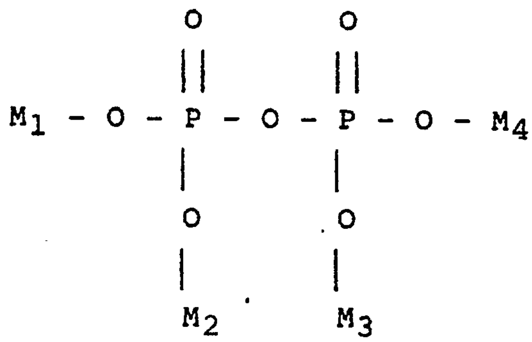

dans laquelle $M_1$, $M_2$, $M_3$ et $M_4$ représentent chacun indépendamment un atome d'hydrogène, un atome de métal alcalin, un groupe ammonium ou, avec la modification correspondante de la formule, un atome de métal alcalino-terreux, sous réserve cependant qu'au moins un des symboles $M_1$, $M_2$, $M_3$ et $M_4$ représente un atome d'hydrogène.

2. Mélange de polymères selon la revendication 1, caractérisé en ce qu'il comprend comme stabilisant 0,05 à 5% en poids du diphosphate stabilisant relativement à la somme des poids des polyesters aromatiques.

3. Mélange de polymères selon les revendications 1 et 2, caractérisé en ce qu'il comprend du diphosphate disodique comme stabilisant.

4. Mélange de polymères selon les revendications 1 à 3, caractérisé en ce qu'il comprend 5 à 95% en poids d'un polyester constitué de polybutylène téréphtalate et 95% à 5% en poids d'un polycarbonate aromatique, relativement à la somme des poids des polyesters aromatiques.

5. Mélange de polymères selon les revendications 1 à 4, caractérisé en ce qu'il comprend un agent pour améliorer la résistance au choc.

6. Mélange de polymères selon les revendications 1 à 5, caractérisé en ce qu'il comprend un ou plusieurs des constituants suivants: des charges, des fibres de renfort, des plastifiants, des colorants, des pigments, d'autres stabilisants, des agents de démoulage et des ignifugeants.

7. Articles formés à partir du mélange de polymères d'une ou plusieurs des revendications précédentes.